# EUROPEAN PATENT SPECIFICATION

(11) **EP 3 189 474 B1**
(45) Date of publication and mention of the grant of the patent: **02.11.2022**
(21) Application number: 14758138.3
(22) Date of filing: 01.09.2014
(51) Int. Cl.: G06V 10/147, B65G 47/14, G06V 10/24, G06V 20/66

(54) **A COMPONENT FEEDER IMAGING SYSTEM, A COMPONENT FEEDER AND A ROBOT COMPONENT FEEDER SYSTEM**
KOMPONENTENZUFÜHRERABBILDUNGSSYSTEM, KOMPONENTENZUFÜHRER UND ROBOTERKOMPONENTENZUFÜHRERSYSTEM
SYSTÈME D'IMAGERIE POUR DISPOSITIF DE DISTRIBUTION DE PIÈCES, DISPOSITIF DE DISTRIBUTION DE PIÈCES ET SYSTÈME DE DISPOSITIF DE DISTRIBUTION DE PIÈCES POUR ROBOT

(43) Date of publication of application: 12.07.2017
(73) Proprietor: ABB Schweiz AG, 5400 Baden (CH)
(72) Inventor: SIRKETT, Daniel, 722 10 Västerås (SE)
(74) Representative: Kransell & Wennborg KB
(86) International application number: PCT/EP2014/068475
(87) International publication number: WO 2016/034190

(56) References cited:
- WO-A1-2013/113535
- US-A- 5 232 216
- Jim Camillo: "Flexible Feeding for Assembly Automation | 2014-03-01 | Assembly Magazine", , 1 March 2014 (2014-03-01), pages 1-15, XP055192475, Retrieved from the Internet: URL:http://www.assemblymag.com/articles/91 944-flexible-feeding-for-assembly-automati on [retrieved on 2015-05-29]
- Gerard Van Dalen: "CHARACTERISATION OF RICE USING FLATBED SCANNING AND IMAGE ANALYSIS", Food Policy, 1 January 2005 (2005-01-01), pages 149-186, XP055192473, Retrieved from the Internet: URL:http://www.researchgate.net/profile/Ge rard_Dalen/publication/230898838_CHARACTER ISATION_OF_RICE_USING_FLATBED_SCANNING_AND _IMAGE_ANALYSIS/links/0912f505f1ad8ac1fc00 0000.pdf [retrieved on 2015-05-29]

## Description

### Technical field of the invention

The present invention relates to a component feeder comprising a component feeder imaging system, and a robot component feeder system comprising an industrial robot and a component feeder.

### Background

In automated industrial systems, such as production lines where for example industrial robots are used, components stored in a disordered bulk storage are required to be fed as individual components, correctly oriented, in order for various operations to be performed. There exist many feeding devices using different principles and which are suitable for different specific tasks. One type of feeder is the type in which randomly oriented components are fed onto and displayed on a presentation surface. An image processing system is typically used in order to determine which components on the display surface are correctly oriented in order to be pickable by for example a robot tool. These types of feeders are flexible since they are not limited to a certain type of component, and are therefore often referred to as flexible parts feeders or flex feeders.

According to prior art, the image processing system often makes use of a camera that is mounted directly overhead of the presentation surface. The camera takes pictures of the parts dispersed on the presentation surface and these pictures are used in robot-vision software to direct the robot gripper to the pickable parts. By pickable parts is for example meant parts that have the correct orientation and which can therefore be picked. If the presentation surface is not backlit, it may be necessary to install lighting alongside the camera. From US 4876728 is known a microprocessor based vision system that includes an overhead camera and two overhead light sources arranged over a conveyor belt, which system is interfaced with a robot system. From WO 2013/113535 is known a component feeder having a bulk storage container, inside which a lift is arranged. The lift has a lift platform that lifts components up from the container and disperses them onto a presentation surface, located above the container. A vision system comprising an overhead camera is arranged over the presentation surface and an image is used to determine which components are correctly oriented to be pickable by a robot tool. According to one embodiment, the presentation surface may be transparent and it may be provided with a backlight arrangement comprising a light source arranged underneath the transparent plate.

Another alternative is to use a camera that is located underneath the presentation surface and upward pointing. At least one commercially-available solution according to this principle is known. This is the "MicroG" Flex Feeder from Flexomation, released in 2012. This is a vibratory feeder, with a glass presentation surface and it is described that the standard downward mounted camera can be replaced by an upward-looking camera. Thereby the bulky supporting structure required for a traditional overhead camera installation can be eliminated.

In order to increase the economic viability of robotized assembly, it is desirable to reduce the time taken to install and commission a new system. At present, a large amount of integration time is spent on installing and adjusting the vision system that complements the flexible parts feeders. The installation itself requires a large amount of supporting structure to position the cameras and lighting, not to mention cables and power supplies, all of which add cost and bulk to the robot cell and can hinder the freedom of movement of the robot. In addition, the set-up of the vision system can be challenging. Problems due to reflections, shadows, uneven lighting and perspective distortions are commonplace and not easily solved by operators lacking specialist knowledge and previous experience with vision systems.

### Summary of the invention

An object of the present invention is to propose a component feeder imaging system that contributes to solve the above mentioned problems and which is compact, effective and easy to install.

Accordingly is defined, according to a first aspect of the invention, a component feeder according to claim 1 or to claim 2.

An advantage of the component feeder imaging system comprised in the component feeder according to the invention is a reduction in the time required to install and commission a vision system for a flexible parts system. In addition, the invention eliminates the need for an overhead support structure for the cameras and lighting, thus reducing installation outlays and saving a significant amount of space. By replacing the camera with an image sensor scanner system, it will also make it possible to have a more compact vision system that for example can be installed inside a flexible parts feeder. The image sensor scanner system will also then be well protected. In addition, if it is installed inside a flexible parts feeder of the type described in WO 2013/113535, it will have the advantage of allowing more space for parts storage inside the feeder.

Another important advantage is that images produced by an image sensor scanner system are largely free of the optical problems, principally perspective errors, which afflict images obtained from cameras, thereby reducing the sensitivity of vision robustness to operator skill.

Other advantages are that the vision system in all feeders in a production line can be reconfigured with the same vision job parameters since the geometric set-up does not vary from one installation to the next as can happen with cameras (slight variations in position, angle, lighting arrangement, reflections, etc.).

Further advantages are that focus adjustment is unnecessary since the focus point is fixed on the surface of the screen. It also has the advantage of eliminating need for camera calibration. Since the image produced is always of exactly the same dimensions it is only necessary to factory-calibrate the imaging system. By contrast, a camera system must be calibrated upon installation and if the cameras are for any reason moved.

According to one embodiment, the vision system comprises a contact image sensor (CIS) scanner system. This is the type of optical scanner arrangement that is found in modern flat-bed scanners. Such image sensors comprise a single row of several thousand photodiodes and an illuminating strip comprising tricolor RGB and/or infra-red LED chips. The CIS builds up a complete 2D image by scanning the incident light at each photodiode in the row as the sensor is moved across a surface. An encoder is used to synchronize scanning with sensor movement. While the photodiodes themselves respond only to light and dark, colour images can be obtained by sequentially illuminating red, blue and green LEDs in the illumination strip.

If a CIS is used, it is possible to obtain orthogonal projections of parts free of perspective errors irrespective of their position on the presentation surface. An additional advantage provided by the CIS scanner system is that a uniform background in images is obtained, since the focal depth of the CIS is only a few mm (typically around 5 mm)causing any external lights or distinct shadows to be strongly defocussed. Further, it can function in backlit mode. Where internal details must be observed, the built-in LED strip light will be active during scanning. If the feeder is used with white-coloured parts, then the inbuilt illumination LEDs can be switched off in order to obtain a backlit image. Ambient lighting suffices for this purpose and produces a white, or light grey background. By contrast, with a camera-based system it is necessary to change the colour of the presentation surface from white to black in order to successfully image white parts.

Further, it is possible to obtain high resolution scans. When used on a presentation area of 100x200 mm, a modern CIS with 200 dpi resolution will produce an image with greater pixel density than that of a VGA camera, which produces at best 121 dpi on the same area.

According to an alternative embodiment, the vision system may comprise a charge-coupled device (CCD) image sensor scanner system. This type of optical scanner arrangement comprises two mirrors that are propelled underneath a glass screen, directing a reflection of the objects above to a fixed line-scan camera mounted at one end of the screen. This system provides excellent results for imaging of flat items directly on the glass. However, when 3D objects are scanned perspective effects manifest themselves, albeit in one direction only. This is due to the fact that a lens is used to focus the whole width of the scan down to the width of the sensor in the line-scan camera, which may be only a few millimeters wide. The result is that 3D objects do not present the same 2D image at all points across the width of the scan but rather perspective distortions increase away from the central axis. The practical upshot is that were a cuboid object such as e.g. a die to be imaged, some portion of its vertical sides would be visible in positions away from the centreline of the scan.

The component feeder is defined as comprising a component pick surface on which components are distributed, and a component feeder imaging system of which the transparent presentation surface forms at least a part of the component pick surface.

This component feeder has advantages corresponding to the above described advantages of the component feeder imaging system. The component feeder imaging system can be combined with many different types of feeders, ranging from the most simple feeder, e.g. a feeder having a pick surface onto which components are poured by hand, to very specialized feeders.

According to one feature, the component feeder may comprise a bulk storage container for storage of components, and a transfer arrangement for transferring components from the storage container to the component pick surface.

According to another feature, the component pick surface may be located on top of the container and the imaging system may then be located inside the container. This is made possible since the imaging system is very compact and it is possible to minimize the depth of the imaging system and thus to avoid impinging on the parts storage capacity. The imaging system can then be located directly underneath the component pick surface.

According to yet another feature, the transfer arrangement may comprise a lift for elevating a selection of components from the storage container and distributing these components onto the component pick surface, which lift is located inside the container, and a transfer device for transferring elevated components from the lift onto the component pick surface.

According to one feature, the component feeder may comprise a plate comprising the component pick surface, which plate is at least partly retractable from the upper opening of the container, and wherein it comprises an actuator device for moving the plate back and forth in the plane of the plate in order to either retract the plate at least partly from said upper opening or move the plate to cover said upper opening.

Generally, the component pick surface is movable, and the vision system comprising the image sensor scanner system can be arranged to scan the presentation surface either in its transverse direction or its longitudinal direction, i.e. in its direction of movement.

According to one embodiment, an image sensor scanner system module comprising the image sensor scanner system can be mounted across the width of the presentation surface. This will make it possible to provide for a system that can produce a longitudinal image of the presentation surface and the parts located on the presentation surface.

In order to produce such an image, the actuator device may be connected to the scanner system module such that it can move the scanner system module in a longitudinal direction of the presentation surface, together with the plate comprising the presentation surface or independently thereof.

According to another feature, the component feeder may comprises a drive mechanism for moving an image sensor scanner system module, comprising the image sensor scanner system, under the presentation surface, which drive mechanism and scanner system module are attached to the plate comprising the presentation surface. Such a drive mechanism may be arranged to move the scanner system module either in a longitudinal direction of the presentation surface or in a transverse direction, and thus produce either a longitudinal or a transversal image of the presentation surface and the parts located thereupon.

The drive mechanism may comprise a belt driven by an electric motor, which belt is connected to a drive wheel connected to the scanner system module such that the scanner system module is movable by means of the motor, and wherein it comprises an encoder connected to the drive wheel for synchronizing the movement of the scanner system module and the scanning operation.

According to a second aspect of the present invention is defined a robot component feeder system comprising a component feeder and an industrial robot comprising a robot controller for controlling the industrial robot to pick correctly oriented components from the component pick surface, characterized in that it comprises a component feeder according to any one of the claims defining a component feeder.

In this description, the expression "image sensor" should be understood to mean a device that converts an optical image into an electronic signal; the expression "image scanner" or "scanner" should be understood to mean a device that optically scans images, printed text, handwriting or an object, and converts it to a digital image, by means of converting the electronic signal from an image sensor to a digital image.

Further features and advantages of the invention will also become apparent from the following detailed description of embodiments.

### Brief description of the drawings

A detailed description of the present invention and embodiments thereof, given as examples only, will now be made with reference to the schematic accompanying drawings, in which:
Fig. 1 illustrates schematically, in cross section, a first embodiment of a component feeder imaging system comprised in a component feeder according to the invention, comprising a contact image sensor (CIS) scanner system;
Fig. 2 illustrates schematically, in cross section, second embodiment of a component feeder imaging system comprised in a component feeder according to the invention, comprising a CCD scanner system;
Fig. 3a-3d illustrates schematically an embodiment of a component feeder according to the invention, in a lateral view in cross section;
Figs. 4a-4d illustrates schematically an alternative of a component feeder;
Fig. 5 illustrates schematically an alternative drive mechanism for a vision system in a component feeder; and
Fig. 6 illustrates schematically a robot component feeder system.

Elements that are the same or represent corresponding or equivalent elements have been given the same reference numbers in the different figures.

### Detailed description

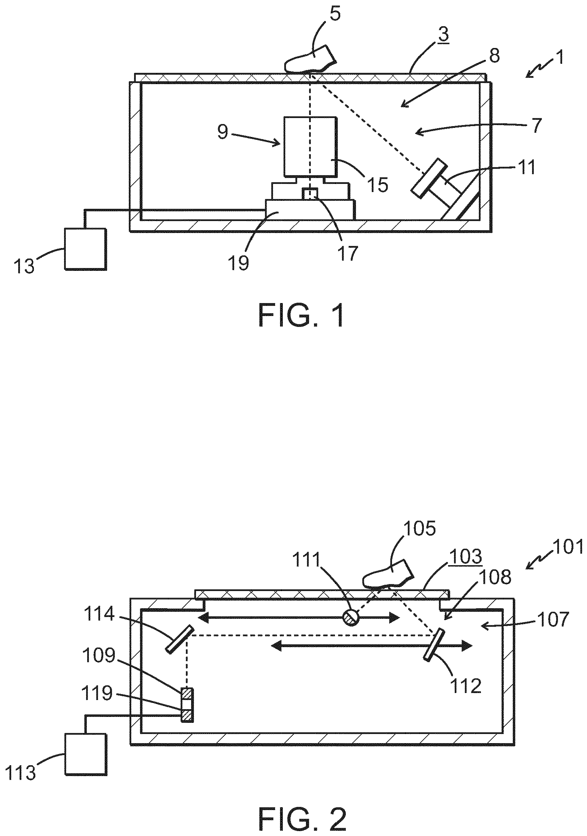

In Fig. 1 is schematically illustrated, in cross section, a first embodiment of a component feeder imaging system 1 comprised in a component feeder according to the invention. The imaging system 1 comprises a transparent presentation surface 3 upon which components 5 to be scanned are present. The imaging system further comprises a vision system 7 that includes an image sensor scanner system 8 comprising at least one image sensor 9 and at least one movable light source 11, both located underneath the transparent presentation surface 3. In the illustrated embodiment, the image sensor scanner system 8 is a CIS (contact image sensor) scanner system. The component feeder imaging system further comprises a system processor 13 for processing information received from the vision system 7 and for determining which components 5 on the presentation surface 3 that are correctly oriented. The CIS scanner system 8 further comprises its usual components comprising a self-focusing rod lens array 15, a photo detector array 17 under the rod lens array and e.g. comprising a row of photodiodes, and a scanner processor 19. The light source 11 usually comprises an illuminating strip of e.g. tricolour LED chips. The illustrated CIS scanner system is only an example. There will exist other CIS scanner systems that would be suitable. For example, the illustrated CIS system is a single light CIS system, but also a dual light CIS system would be suitable.

Fig. 2 illustrates schematically, in cross section, a second embodiment of a component feeder imaging system 101 comprised in a component feeder according to the invention. As for the first embodiment, the imaging system 101 comprises a transparent presentation surface 103 upon which components 105 to be scanned are present. The imaging system further comprises a vision system 107 that includes an image sensor scanner system 108 comprising at least one image sensor 109 and at least one movable light source 111, both located underneath the transparent presentation surface 3. In the illustrated embodiment, the image sensor scanner system 108 is a so called CCD (charge coupled device) scanner system. The component feeder imaging system further comprises a system processor 113 for processing information received from the vision system 107 and for determining which components 105 on the presentation surface 103 that are correctly oriented. The CCD scanner system 108 further comprises its usual components comprising a movable mirror array 112 comprising at least one movable mirror, a fixed mirror 114, and a scanner processor 119 including the CCD array and image sensor 109.

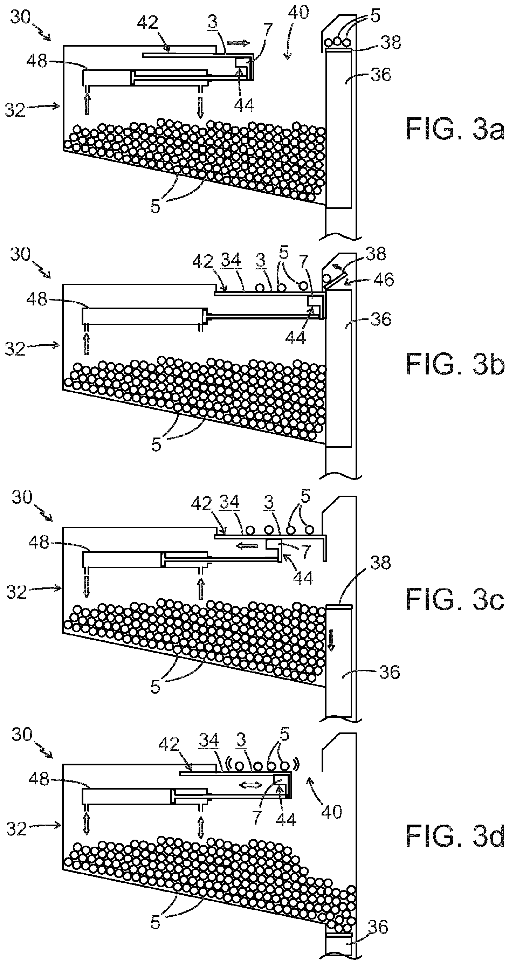

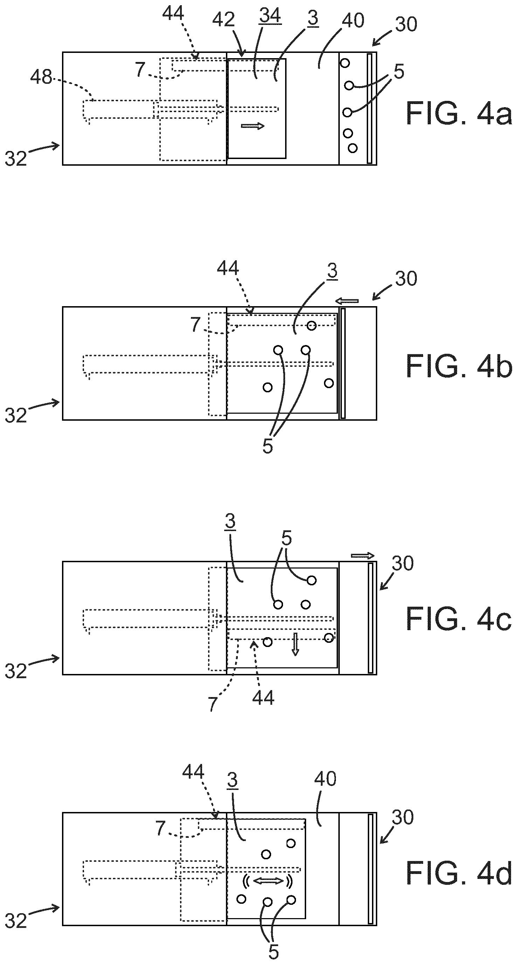

In Figs. 3a-3d is illustrated an embodiment of a component feeder according to the invention, in a lateral view in cross section. The same component feeder is illustrated in Figs. 4a-4d, seen from above, but in these figures there are some differences with regard to the imaging system. The component feeder comprises a container 32 for bulk storage of components 5, preferably fairly small components that are suitable to be picked by a robot tool. The feeder may for example be placed in a production line where robots are used to pick up components that are to be assembled with other components or mounted on apparatuses. A transfer arrangement is provided for transferring components from the container to the component pick surface 34. The transfer arrangement comprises a lift 36 arranged in the container, by means of which components 5 placed inside the container may be vertically elevated up from the container. The lift 36 has a lift platform 38, which is essentially horizontal. When the lift platform is at its bottom level, at the bottom of the container, components 5 fall onto the platform 38 and will then be transported by the lift up to an upper level of the lift. The container 32 has an upper opening 40 which is at least partly covered by a plate 42. The plate 42 is rigid and is capable of being moved, e.g. back and forth, in some type of guide arrangement of a conventional design, not shown in detail. The upper surface of the plate is configured to form a component pick surface 34. When the lift 36 is at its upper level, the lift platform 38 will be adjacent to the plate 42 and approximately level with the component pick surface 34. Components are transferred from the lift platform 38 to the plate 42 and the component pick surface 34 by means of some type of transfer device 46. At least a part of the component pick surface comprises a transparent presentation surface 3.

The plate 42 is retractable from at least part of the container opening 30 as illustrated in Figs. 3a-3d. The plate is moveable by means of an actuator device 48 comprising a pneumatic cylinder, which can give the plate a back and forth movement in its longitudinal direction. By movement of the plate in different modes, the components 5 lying on the plate can be made to move in the longitudinal directions of the plate and they can also be reoriented.

The component feeder 30 comprises a component feeder imaging system 1 that is arranged underneath the plate 42, such that the transparent presentation surface 3 of the imaging system forms at least a part of the component pick surface 34 of the plate 42. In the illustrated embodiment, the imaging system comprises a vision system 7, which in this case is a CIS scanner system 8. A scanner system module 44 comprising the CIS scanner system, i.e. the vision system, is connected to the actuator device 48 and movable by means of the actuator device, in the longitudinal direction of the plate and can thus scan components lying on the presentation surface forming part of the plate. The CIS scanner system module can be moved by the actuator independently of the plate, as shown in Fig. 3c. E.g. a coupling comprising electromagnets or solenoid actuators may be used to connect and disconnect the CIS scanner system module from the plate. In fig. 3a is shown how the plate 42 is moved together with the CIS scanner system module in a direction towards the elevator 36 in order to close the opening 40 of the 32. In fig. 3b is shown how components 5 are being transferred from the lift 36 to the plate 42 and the presentation surface 3. Fig. 3c illustrates how the CIS scanner system module now is moved independently underneath the plate 42, by means of the actuator 48, along its longitudinal direction, such that components 5 that are dispersed on the presentation surface 3 forming part of the plate 42 and the component pick surface 34, are scanned by the CIS scanner system. In order to synchronize the movement with the scanning, an encoder is used. The images obtained through the scanning are then processed by the scanner processor 19 of the CIS scanner system and the corresponding information is further processed by the system processor 13 in order to determine which components that are correctly oriented to be pickable. This information is then used to control e.g. a robot to pick these components.

After scanning, the CIS scanner system module is then returned to its rest position at the end of the plate 42 close to the elevator 36, and will stay there until the next scanning sequence. In the illustrated component feeder, there is also a step where components lying on the pick surface and which have not been picked, are returned to the container, as shown in Fig. 3d. During this step, the CIS scanner system module will move together with the plate 42.

In Figs. 4a-4d is illustrated an example where the vision system 7 performs a scanning in the transversal direction of a component pick surface 34. The component feeder 30 is the same type of component feeder as is illustrated in Figs. 3a-3d and performs the same steps and motions. The vision system, comprising a CIS scanner system module 44 is mounted underneath the plate 42 comprising a component pick surface 34 of which at least a part also forms a transparent presentation surface 3. The CIS scanner system module is mounted along a longitudinal side of the plate. When components 5 have been distributed on the plate, see Figs. 4b and 4c, the CIS scanner system module is moved transversally underneath and across the plate, from one side to the other and back, and thereby scanning the components 5 that are dispersed on the presentation surface 3. The transversal movement of the CIS scanner system module is obtained by a separate drive mechanism.

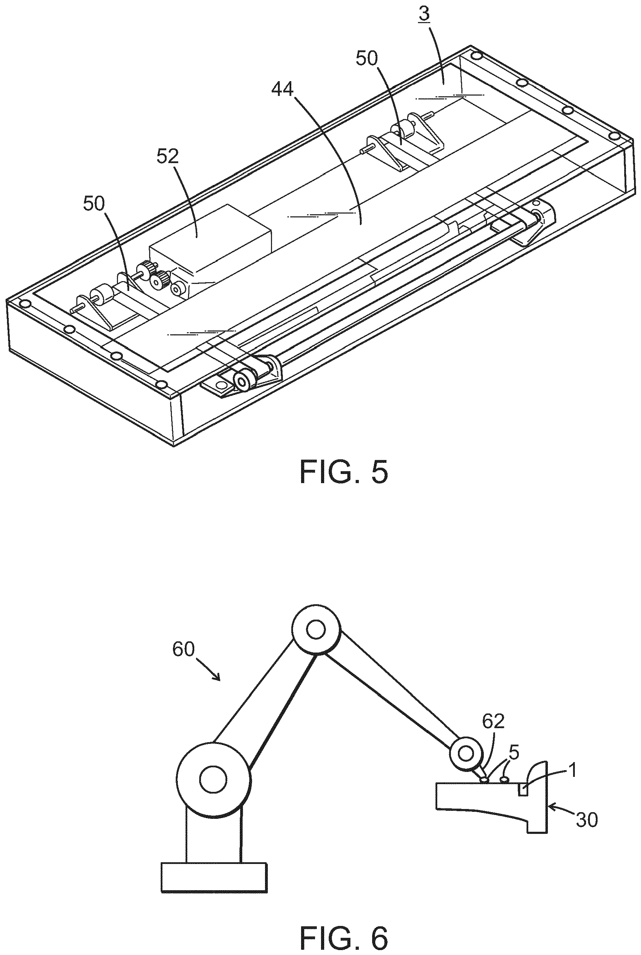

In Fig. 5 is schematically illustrated an example of a drive mechanism. The vision system 7 comprising a CIS scanner system module 44 is mounted underneath the transparent presentation surface 3. The CIS scanner system module is mounted on a toothed belt 50 that is driven by an electric motor 52. An encoder of the CIS scanner system, which provides scan synchronization, is connected to one of the wheels of the belt in order to obtain timing of the movements. Limits switches are arranged to cause the belt to automatically reverse and return to start once a scanning operation is completed.

In Fig. 6 is schematically illustrated a robot component feeder system comprising a component feeder 30 and an industrial robot 60 provided with a tool 62 and including a robot controller for controlling the industrial robot to pick correctly oriented components from the component pick surface, in which the component feeder is according to any one of the embodiments of the present invention.

In the illustrated embodiments of the component feeder the vision system is illustrated as comprising a CIS scanner system. However, it should be understood that alternatively a CCD scanner system could be used, with suitable modifications.

The invention shall not be considered limited to the illustrated embodiments, but can be modified and altered in many ways, as realised by a person skilled in the art, without departing from the scope defined in the appended claims.

## Claims

1. A component feeder (30) comprising:
a component pick surface (34) on which components (5) are to be distributed, and
a component feeder imaging system (1), the component feeder imaging system (1) comprising:
- a transparent presentation surface (3) on which components (5) are to be distributed, wherein the transparent presentation surface (3) forms at least a part of the component pick surface (34),
- a vision system (7), and
- a system processor (13) for processing information received from the vision system and for determining which components on the presentation surface that are correctly oriented,
**characterized in that** the vision system comprises a contact image sensor, CIS, scanner system (8) comprising at least one image sensor (9) located underneath the presentation surface and comprising at least one movable light source (11) located underneath the presentation surface, wherein the CIS scanner system (8) is configured to move across the presentation surface during scanning in such manner that light from the movable light source (11) is reflected by the components (5) and impinges on the image sensor (9).

2. A component feeder (30) comprising:
a component pick surface (34) on which components (5) are to be distributed, and
a component feeder imaging system (101), the component feeder imaging system (101) comprising:
- a transparent presentation surface (103) on which components (105) are to be distributed, wherein the transparent presentation surface (103) forms at least a part of the component pick surface (34),
- a vision system (107), and
- a system processor (113) for processing information received from the vision system and for determining which components on the presentation surface that are correctly oriented,
**characterized in that** the vision system comprises a charge-coupled device, CCD, image sensor scanner system (108) comprising at least one image sensor (109) located underneath the presentation surface, at least one movable light source (111) which is located underneath and movable parallel to the presentation surface, and a movable mirror array (112) with at least one movable mirror, wherein the movable light source (111) and said at least one movable mirror are configured to move during scanning in such manner that light from the movable light source (111) is reflected by the components (105) and impinges via the at least one movable mirror on the image sensor (109).

3. A component feeder according to claim 1 or 2, wherein it comprises a bulk storage container (32) for storage of components, and a transfer arrangement (36, 38, 46) for transferring components from the storage container to the component pick surface (34).

4. A component feeder according to claim 3, wherein the component pick surface (34) is located on the top of the container (32) and the imaging system (1; 101) is located inside the container.

5. A component feeder according to claim 4, wherein the transfer arrangement comprises a lift (36) for elevating a selection of components from the storage container and distributing these components onto the component pick surface, which lift is located inside the container (32), and a transfer device (46) for transferring elevated components from the lift onto the component pick surface (34).

6. The component feeder according to claim 5, wherein it comprises a plate (42) comprising the component pick surface (34), which plate is at least partly retractable from an upper opening (40) of the container (32), and wherein it comprises an actuator device (48) for moving the plate back and forth in the plane of the plate in order to either retract the plate at least partly from said upper opening or move the plate to cover said upper opening.

7. The component feeder according to claim 6, wherein an image sensor scanner system module (44) comprising the image sensor scanner system (7; 107) is mounted across the width of the presentation surface (3; 103).

8. The component feeder according to claim 7, wherein the actuator device (48) is connected to the scanner system module (44) and can move the scanner system module in a longitudinal direction of the presentation surface (3; 103), together with the plate comprising the presentation surface or independently thereof.

9. The component feeder according to claim 6, wherein it comprises a drive mechanism for moving an image sensor scanner system module (44) comprising the image sensor scanner system (7; 107) under the presentation surface (3; 103), which drive mechanism and scanner system module are attached to the plate (42) comprising the presentation surface.

10. The component feeder according to claim 9, wherein the drive mechanism comprises a belt (50) driven by an electric motor (52), which belt is connected to a drive wheel connected to the scanner system module (44) such that the scanner system module is movable by means of the motor, and wherein the scanner system module comprises an encoder connected the drive wheel for synchronizing the movement of the scanner system module and the scanning operation.

11. A robot component feeder system comprising a component feeder 30 and an industrial robot 60 comprising a robot controller for controlling the industrial robot to pick correctly oriented components from the component pick surface, **characterized in that** it comprises a component feeder according to any one of claims 1-10.

## Patentansprüche

1. Einzelteilzuführeinrichtung (30), die Folgendes umfasst:
eine Einzelteilentnahmefläche (34), auf der Einzelteile (5) zu verteilen sind,
und ein Bildgebungssystem (1) der Einzelteilzuführeinrichtung, wobei das Bildgebungssystem (1) der Einzelteilzuführeinrichtung Folgendes umfasst:
- eine lichtdurchlässige Präsentationsoberfläche (3), auf der Einzelteile (5) zu verteilen sind, wobei die lichtdurchlässige Präsentationsoberfläche (3) mindestens einen Teil der Einzelteilentnahmefläche (34) bildet,
- ein Bilderkennungssystem (7) und
- einen Systemprozessor (13) zum Verarbeiten von Informationen, die von dem Bilderkennungssystem empfangen werden, und zum Bestimmen, welche Einzelteile auf der Präsentationsoberfläche richtig ausgerichtet sind,
**dadurch gekennzeichnet, dass** das Bilderkennungssystem ein Abtastsystem (8) mit Kontakt-Bildsensor, CIS, umfasst, das mindestens einen Bildsensor (9) umfasst, der sich unter der Präsentationsoberfläche befindet, und mindestens eine bewegliche Lichtquelle (11), die sich unter der Präsentationsoberfläche befindet, umfasst, wobei das CIS-Abtastsystem (8) konfiguriert ist, sich während der Abtastung auf eine derartige Weise über die Präsentationsoberfläche zu bewegen, dass Licht von der beweglichen Lichtquelle (11) durch die Einzelteile (5) reflektiert wird und auf den Bildsensor (9) trifft.

2. Einzelteilzuführeinrichtung (30), die Folgendes umfasst:
eine Einzelteilentnahmefläche (34), auf der Einzelteile (5) zu verteilen sind, und
ein Bildgebungssystem (101) der Einzelteilzuführeinrichtung, wobei das Bildgebungssystem (101) der Einzelteilzuführeinrichtung Folgendes umfasst:
- eine lichtdurchlässige Präsentationsoberfläche (103), auf der Einzelteile (105) zu verteilen sind, wobei die lichtdurchlässige Präsentationsoberfläche (103) mindestens einen Teil der Einzelteilentnahmefläche (34) bildet,
- ein Bilderkennungssystem (107) und
- einen Systemprozessor (113) zum Verarbeiten von Informationen, die von dem Bilderkennungssystem empfangen werden, und zum Bestimmen, welche Einzelteile auf der Präsentationsoberfläche richtig ausgerichtet sind,
**dadurch gekennzeichnet, dass** das Bilderkennungssystem ein Abtastsystem (108) mit einem Bildsensor mit ladungsgekoppeltem Bauteil, CCD, das mindestens einen Bildsensor (109), der sich unter der Präsentationsoberfläche befindet, mindestens eine bewegliche Lichtquelle (111), die sich unter der Präsentationsoberfläche befindet und parallel zu ihr bewegt werden kann, und eine bewegliche Spiegelanordnung (112) mit mindestens einem beweglichen Spiegel umfasst, wobei die bewegliche Lichtquelle (111) und der mindestens eine bewegliche Spiegel konfiguriert sind, sich während der Abtastung auf eine derartige Weise zu bewegen, dass Licht von der beweglichen Lichtquelle (111) durch die Einzelteile (105) reflektiert wird und über den mindestens einen beweglichen Spiegel auf den Bildsensor (109) trifft.

3. Einzelteilzuführeinrichtung nach Anspruch 1 oder 2, wobei sie einen Sammellagerungsbehälter (32) zur Lagerung von Einzelteilen und eine Transportanordnung (36, 38, 46) zum Transportieren von Komponenten von dem Lagerungsbehälter zu der Einzelteilentnahmeoberfläche (34) umfasst.

4. Einzelteilzuführeinrichtung nach Anspruch 3, wobei sich die Einzelteilentnahmeoberfläche (34) auf der Oberseite des Behälters (32) befindet und sich das Bildgebungssystem (1; 101) innerhalb des Behälters befindet.

5. Einzelteilzuführeinrichtung nach Anspruch 4, wobei die Transportanordnung eine Hebevorrichtung (36) zum Anheben einer Auswahl von Einzelteilen aus dem Lagerungsbehälter und Verteilen dieser Einzelteile auf dem Einzelteilentnahmeoberfläche, wobei sich die Hebevorrichtung innerhalb des Behälters (32) befindet, und eine Transportvorrichtung (46) zum Transportieren von angehobenen Einzelteilen von der Hebevorrichtung auf die Einzelteilentnahmeoberfläche (34) umfasst.

6. Einzelteilzuführeinrichtung nach Anspruch 5, wobei sie eine Platte (42) umfasst, die die Einzelentnahmeoberfläche (34) umfasst, wobei die Platte zumindest teilweise von einer oberen Öffnung (40) des Behälters (32) zurückgezogen werden kann, und wobei sie eine Stellantriebsvorrichtung (48) zum Bewegen der Platte vor und zurück in der Ebene der Platte umfasst, um entweder die Platte zumindest teilweise von der oberen Öffnung zurückzuziehen oder die Platte zu bewegen, die obere Öffnung abzudecken.

7. Einzelteilzuführeinrichtung nach Anspruch 6, wobei ein Abtastsystemmodul (44) mit Bildsensor, das das Bildsensorabtastsystem (7; 107) umfasst, über die Breite der Präsentationsoberfläche (3; 103) montiert ist.

8. Einzelteilzuführeinrichtung nach Anspruch 7, wobei die Stellantriebsvorrichtung (48) mit dem Abtastsystemmodul (44) verbunden ist und das Abtastsystemmodul zusammen mit der Platte, die die Präsentationsoberfläche umfasst, oder unabhängig davon in einer Längsrichtung der Präsentationsoberfläche (3; 103) bewegen kann.

9. Einzelteilzuführeinrichtung nach Anspruch 6, wobei sie einen Antriebsmechanismus zum Bewegen eines Abtastsystemmoduls (44) mit Bildsensor umfasst, das das Abtastsystem (7; 107) mit Bildsensor unter der Präsentationsoberfläche (3; 103) umfasst, wobei der Antriebsmechanismus und das Abtastsystemmodul an der Platte (42) angebracht sind, die die Präsentationsoberfläche umfasst.

10. Einzelteilzuführeinrichtung nach Anspruch 9, wobei der Antriebsmechanismus einen Riemen (50) umfasst, der durch einen Elektromotor (52) angetrieben wird, wobei der Riemen mit einem Antriebsrad verbunden ist, der mit dem Abtastsystemmodul (44) derart verbunden ist, dass das Abtastsystemmodul mittels des Motors bewegt werden kann, und wobei das Abtastsystemmodul einen Absolutwertgeber, der mit dem Antriebsrad verbunden ist, zum Synchronisieren der Bewegung des Abtastsystemmoduls und des Abtastvorgangs umfasst.

11. Robotersystem mit Einzelteilzuführeinrichtung, das eine Einzelteilzuführeinrichtung 30 und einen Industrieroboter 60 umfasst, das eine Robotersteuereinheit zum Steuern des Industrieroboters umfasst, um korrekt ausgerichtete Einzelteile von der Einzelteilentnahmeoberfläche zu entnehmen, **dadurch gekennzeichnet, dass** es eine Einzelteilzuführeinrichtung nach einem der Ansprüche 1-10 umfasst.

## Revendications

1. Dispositif de distribution de pièces (30) comprenant :
une surface de saisie de pièces (34) sur laquelle des pièces (5) doivent être distribuées, et un système d'imagerie de dispositif de distribution de pièces (1), le système d'imagerie de dispositif de distribution de pièces (1) comprenant :
une surface de présentation transparente (3) sur laquelle des pièces (5) doivent être distribuées, dans lequel la surface de présentation transparente (3) forme au moins une partie de la surface de saisie de pièces (34),
un système de vision (7), et
un processeur de système (13) destiné à traiter des informations reçues depuis le système de vision et à déterminer les pièces sur la surface de présentation qui sont correctement orientées,
**caractérisé en ce que** le système de vision comprend un système de balayage (8) à capteur d'image de contact, CIS, comprenant au moins un capteur d'image (9) situé sous la surface de présentation et comprenant au moins une source de lumière mobile (11) située sous la surface de présentation, dans lequel le système de balayage CIS (8) est conçu pour se déplacer sur la surface de présentation pendant le balayage de sorte que la lumière provenant de la source de lumière mobile (11) soit réfléchie par les pièces (5) et entre en contact avec le capteur d'image (9).

2. Dispositif de distribution de pièces (30) comprenant :
une surface de saisie de pièces (34) sur laquelle des pièces (5) doivent être distribuées, et un système d'imagerie de dispositif de distribution de pièces (101), le système d'imagerie de dispositif de distribution de pièces (101) comprenant :
une surface de présentation transparente (103) sur laquelle des pièces (105) doivent être distribuées, dans lequel la surface de présentation transparente (103) forme au moins une partie de la surface de saisie de pièces (34),
un système de vision (107), et
un processeur de système (113) destiné à traiter des informations reçues depuis le système de vision et à déterminer les pièces sur la surface de présentation qui sont correctement orientées,
**caractérisé en ce que** le système de vision comprend un système de balayage à capteur d'image à dispositif à couplage de charge, CCD (108) comprenant au moins un capteur d'image (109) situé sous la surface de présentation, au moins une source de lumière mobile (111) qui est située sous et peut se déplacer parallèlement à la surface de présentation, et un réseau de miroirs mobiles (112) ayant au moins un miroir mobile, dans lequel la source de lumière mobile (111) et ledit au moins un miroir mobile sont conçus pour se déplacer pendant le balayage de sorte que la lumière provenant de la source de lumière mobile (111) soit réfléchie par les pièces (105) et entre en contact avec l'au moins un miroir mobile sur le capteur d'image (109).

3. Dispositif de distribution de pièces selon la revendication 1 ou 2, comprenant un conteneur de stockage en vrac (32) pour le stockage de pièces, et un agencement de transfert (36, 38, 46) destiné au transfert de pièces du conteneur de stockage à la surface de saisie de pièces (34) .

4. Dispositif de distribution de pièces selon la revendication 3, dans lequel la surface de saisie de pièces (34) est située au-dessus du conteneur (32) et le système d'imagerie (1 ; 101) est situé à l'intérieur du conteneur.

5. Dispositif de distribution de pièces selon la revendication 4, dans lequel l'agencement de transfert comprend un dispositif élévateur (36) destiné à élever une sélection de pièces depuis le conteneur de stockage et à distribuer ces pièces sur la surface de saisie de pièces, lequel dispositif élévateur est situé à l'intérieur du conteneur (32), et un dispositif de transfert (46) destiné à transférer les pièces élevées depuis le dispositif élévateur sur la surface de saisie de pièces (34).

6. Dispositif de distribution de pièces selon la revendication 5, comprenant une plaque (42) comprenant la surface de saisie de pièces (34), laquelle plaque est au moins en partie rétractable depuis une ouverture supérieure (40) du conteneur (32), et comprenant un dispositif d'actionnement (48) destiné à déplacer la plaque d'avant en arrière dans le plan de la plaque afin de soit rétracter la plaque au moins en partie depuis ladite ouverture supérieure, soit déplacer la plaque pour recouvrir ladite ouverture supérieure.

7. Dispositif de distribution de pièces selon la revendication 6, dans lequel un module de système de balayage à capteur d'image (44) comprenant le système de balayage à capteur d'image (7 ; 107) est monté sur la largeur de la surface de présentation (3 ; 103).

8. Dispositif de distribution de pièces selon la revendication 7, dans lequel le dispositif d'actionnement (48) est relié au module de système de balayage (44) et peut déplacer le module de système de balayage dans une direction longitudinale de la surface de présentation (3 ; 103), en même temps que la plaque comprenant la surface de présentation ou indépendamment de celle-ci.

9. Dispositif de distribution de pièces selon la revendication 6, comprenant un mécanisme d'entraînement destiné à déplacer un module de système de balayage à capteur d'image (44) comprenant le système de balayage à capteur d'image (7 ; 107) sous la surface de présentation (3 ; 103), lequel mécanisme d'entraînement et lequel module de système de balayage sont fixés à la plaque (42) comprenant la surface de présentation.

10. Dispositif de distribution de pièces selon la revendication 9, dans lequel le mécanisme d'entraînement comprend une courroie (50) entraînée par un moteur électrique (52), laquelle courroie est reliée à une roue d'entraînement reliée au module de système de balayage (44) de sorte que le module de système de balayage soit mobile au moyen du moteur, et dans lequel le module de système de balayage comprend un codeur relié à la roue d'entraînement pour synchroniser le déplacement du module de système de balayage et l'opération de balayage.

11. Système de dispositif de distribution de pièces pour robot comprenant un dispositif de distribution de pièces 30 et un robot industriel 60 comprenant un contrôleur de robot destiné à commander le robot industriel pour saisir des pièces orientées correctement de la surface de saisie de pièces, **caractérisé en ce qu'**il comprend un dispositif de distribution de pièces selon l'une quelconque des revendications 1 à 10.
